Europäisches Patentamt

European Patent Office

Office européen des brevets

(19)

(11) Publication number: **0 104 002**
**B1**

# (12) EUROPEAN PATENT SPECIFICATION

(45) Date of publication of patent specification: **04.05.88**

(51) Int. Cl.⁴: **C 01 G 23/00**

(21) Application number: **83304893.7**

(22) Date of filing: **24.08.83**

(54) Methods of manufacturing metal titanate fine powders.

(30) Priority: **25.08.82 JP 147226/82**
**31.08.82 JP 151240/82**
**08.09.82 JP 156315/82**

(43) Date of publication of application:
**28.03.84 Bulletin 84/13**

(45) Publication of the grant of the patent:
**04.05.88 Bulletin 88/18**

(84) Designated Contracting States:
**DE FR GB NL**

(56) References cited:
**DE-A-2 707 229**
**DE-A-2 804 104**
**US-A-3 577 487**

(73) Proprietor: **SONY CORPORATION**
**7-35 Kitashinagawa 6-Chome Shinagawa-ku**
**Tokyo 141 (JP)**

(72) Inventor: **Uedaira, Satoru**
**Patent Division, Sony Corp.**
**7-35 Kitashinagawa-6**
**Shinagawa-ku Tokyo (JP)**
Inventor: **Yamanoi, Hiroshi**
**Patent Division, Sony Corp.**
**7-35 Kitashinagawa-6**
**Shinagawa-ku Tokyo (JP)**
Inventor: **Tamura, Hidemasa**
**Patent Division, Sony Corp.**
**7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

EP 0 104 002 B1

## Description

This invention relates to methods of manufacturing metal titanate fine powders, and more particularly is directed to methods of manufacturing barium titanate, strontium titanate and calcium titanate fine powder by liquid-phase reaction.

Recently, manufacture of metal titanate ultra-fine powder such as barium titanate $BaTiO_3$, strontium titanate $SrTiO_3$ and calcium titanate $CaTiO_3$ ultra-fine powders has been required for several uses. One such requirement relates to a multilayer ceramic capacitor, which is required to be small and light, like other electronic parts, but of large capacitance. In a multilayer ceramic capacitor, barium titanate, strontium titanate or calcium titanate are employed as a ferroelectric material. In order to make the thickness of the multilayer ceramic capacitor small and uniform, it is necessary to make the above material as ultra-fine powders. In addition, in such a multilayer ceramic capacitor, lead is mixed into the material because of its firing properties and temperature characteristics. However, if the firing temperature is high, the lead is partly evaporated, so that multilayer ceramic capacitors of uniform characteristics cannot be obtained. If an ultra-fine powder of a metal titanate such as barium titanate could be made finer, the firing temperature could be lower with improved results.

Moreover, metal titanate ultra-fine powders such as $BaTiO_3$, $SrTiO_3$ and $CaTiO_3$ ultra-fine powders are required for use as electrostrictive materials, piezo-electric materials or transparent ceramics.

$BaTiO_3$, $SrTiO_3$ and $CaTiO_3$ have been manufactured by calcination. More particularly, barium carbonate $BaCO_3$ powder and titanium oxide powder are mixed and calcined at 1000 to 1200°C; or strontium carbonate $SrCO_3$ powder and titanium oxide powder are mixed and calcined at 1000 to 1300°C; or calcium carbonate $CaCO_3$ powder and titanium oxide powder are mixed and calcined at 1000 to 1200°C. The calcined material thus made is mechanically ground to a fine powder, but the particle size is relatively large and not uniform, so to obtain fine and uniform particles, it is necessary to sieve the ground powder to eliminate large particles. Moreover, it is difficult to avoid the introduction of impurities during these processes.

Recently it has also been proposed to synthesize metal titanate fine powders such as $BaTiO_3$, $SrTiO_3$ and $CaTiO_3$ using a metal alkoxide. However, this involves high manufacturing cost and therefore has not been used in practice. The size of $BaTiO_3$ particles obtained by this method is $500 \times 10^{-10}$m.

The crystal system of the $BaTiO_3$ obtained with the above two methods is tetragonal ($a_0 = 3.994 \times 10^{-10}$m and $c_0 = 4.038 \times 10^{-10}$m).

UK patent specification GB—A—1 560 623 discloses a process for the production of a zinc and/or at least one alkaline earth metal titanate by precipitating zinc or alkaline earth metal hydroxides, wherein a zinc and/or at least one alkaline earth metal hydroxide is precipitated at room temperature by the simultaneous addition of a zinc and/or at least one alkaline earth metal salt solution and an alkali solution to finely divided titanium dioxide and/or titanium dioxide hydrolysate sludge at a substantially constant pH value above 8, and wherein the resulting suspension is calcined at a temperature above 500°C. Where calcium titanate is required a pH value of about 13 is mentioned. The resulting suspension is a mixture of metal hydroxide and titanium dioxide hydrolyzate from which the required metal titanate is formed by the calcining. The size of the particles obtained is 0.25 to 0.5 μm and is determined by the calcining temperature and time.

According to the present invention there is provided a method of manufacturing a metal titanate fine powder having the formula $MTiO_3$ wherein M is Ba, Sr or Ca, comprising the step of:

preparing a hydrolysis product of an inorganic titanium compound $TiO_2 \cdot xH_2O$ by dissolving said inorganic titanium compound in a neutral or alkaline aqueous solution; and

characterised by the further steps of:

reacting said hydrolysis product with a water soluble salt of Ba, Sr or Ca in an aqueous alkaline solution having a pH value higher than 13 and at a temperature in a range from 40°C to the boiling point of the aqueous solution to obtain barium titanate fine powder, in a range from 60°C to the boiling point of the aqueous solution to obtain strontium titanate fine powder, or in a range from 70°C to the boiling point of the aqueous solution to obtain calcium titanate fine powder; and

filtering said fine powder directly from the remaining solution without the need to calcine the filtered fine powder.

The invention will now be described by way of example with reference to the accompanying drawings, throughout which like parts are referred to by like references, and in which:

Figure 1 is a graph showing an X-ray diffraction pattern of barium titanate fine powder made by a method according to the invention;

Figure 2 is a dark image photograph by an electron microscope of barium titanate fine powder made by a method according to the invention;

Figure 3 is a bright image photograph by an electron microscope of barium titanate fine powder made by a method according to the invention;

Figure 4 is a graph showing results of differential thermal analysis of barium titanate fine powder made by a method according to the invention;

Figure 5 is a graph showing results of thermo-gravimetric analysis of barium titanate fine powder made by a method according to the invention;

Figure 6 is a graph showing the pH dependency of the amount of barium titanate fine powder made by a method according to the invention;

Figure 7 is a graph showing a relation between the amount of barium titanate fine powder made by a method of the invention and the molar ratio Ba/Ti;

Figure 8 is a graph showing a relation between the amount of barium titanate fine powder made by a method according to the invention and the reaction temperature;

Figure 9 is a graph showing a relation between the amount of barium titanate fine powder made by a method according to the invention and the reaction time;

Figure 10 is a graph indicating an X-ray diffraction pattern of strontium titanate fine powder made by a method according to the invention;

Figure 11 is a dark image photograph by an electron microscope of strontium titanate fine powder made by a method according to the invention;

Figure 12 is a bright image photograph by an electron microscope of strontium titanate fine powder made by a method according to the invention;

Figure 13 is a graph indicating the pH dependency of the amount of strontium titanate fine powder made by a method according to the invention;

Figure 14 is a graph indicating a relation between the amount of strontium titanate fine powder made by a method according to the invention and the molar ratio Sr/Ti;

Figure 15 is a graph indicating a relation between the amount of strontium titanate fine powder made by a method according to the invention and the reaction temperature;

Figure 16 is a graph indicating a relation between the amount of strontium titanate fine powder made by a method according to the invention and the reaction time;

Figure 17 is a graph indicating results of differential thermal analysis of strontium titanate fine powder made by a method according to the invention;

Figure 18 is a graph indicating results of thermo-gravimetric analysis of strontium titanate fine powder made by a method according to the invention;

Figure 19 is a graph indicating an X-ray diffraction pattern of calcium titanate fine powder made by a method according to the invention;

Figure 20 is a photograph by a scanning electromicroscope indicating calcium titanate fine powder made by a method according to the invention;

Figure 21 is a graph indicating results of differential thermal analysis of calcium titanate fine powder made by a method according to the invention;

Figure 22 is a graph indicating results of thermo-gravimetric analysis of calcium titanate fine powder made by a method according to the invention;

Figure 23 is a graph indicating the pH dependency of the amount of calcium titanate fine powder made by a method according to the invention;

Figure 24 is a graph indicating a relation between the amount of calcium titanate fine powder made by a method according to the invention and the molar ratio Ca/Ti;

Figure 25 is a graph indicating a relation between the amount of calcium titanate fine powder made by a method according to the invention and the reaction temperature; and

Figure 26 is a graph indicating a relation between the amount of calcium titanate fine powder made by a method according to the invention and the reaction time.

In methods according to the invention of manufacturing metal titanate $MTiO_3$ (where M is barium Ba, strontium Sr or calcium Ca) fine powder, a hydrolysation product of titanium Ti compound and a water soluble metal salt are reacted in a strong alkaline aqueous solution or suspension.

The methods will first be described in detail in connection with the manufacture of barium titanate $BaTiO_3$ fine powder. The Ti compound is prepared first. The titanium compound can, for example, be titanium tetrachloride $TiCl_4$, titanyl sulphate $Ti(SO_4)_2$ or titanoxy sulphate $TiOSO_4$. This Ti compound is hydrolysed. For example, with $TiCl_4$ and $Ti(SO_4)_2$ aqueous solutions thereof are made neutral thereby to obtain $TiO_2 \cdot xH_2O$. When $Ti(SO_4)_2$ is employed, in order to remove the sulphate group, rinsing by water is performed to filter $TiO_2 \cdot xH_2O$.

Next, a water soluble barium salt is prepared and then reacted with the above hydrolysed product in suspension in the strong alkaline aqueous solution. When in the hydrolysation reaction, filtering to remove the sulphate group or the like is not required, the reaction in the suspension of strong alkaline aqueous solution can be carried out at the same time as the hydrolysation reaction.

The water soluble Ba salt can be $Ba(NO_3)_2$, $Ba(OH)_2$, $BaCl_2$ or $Ba(CH_3COO)_2$, while the alkali can be LiOH, KOH, NaOH, or $NH_4OH$.

The pH of the suspension of strong alkaline aqueous solution is selected to be higher than 13.0, more preferably 13.5 or above. The molar ratio between Ba and Ti, Ba/Ti, is selected to be more than 0.5, more preferably 0.7 to 5. The reaction temperature is selected to be higher than 40°C, up to the boiling point of the aqueous solution. The reaction time is selected to be sufficient to effect the reaction.

After the reactions as described above, filtering, rinsing and drying treatments are carried out, if necessary.

With this method of manufacture, $BaTiO_3$ fine powder having a uniform particle size as small as 200 to $300 \times 10^{-10}$ m can be obtained. Since in the previously proposed synthesis based upon calcination, the $BaTiO_3$ was mechanically ground to a fine powder, the above particle size of 200 to $300\times10^{-10}$ m could not be expected. When the $BaTiO_3$ fine powder made by a method according to the invention is used for forming a multilayer ceramic capacitor, the firing temperature can be lowered. Thus lead can be mixed uniformly into the $BaTiO_3$ fine powder, removing the scatter characteristics. Then, since the dielectric constant of the material can be increased at room temperature, it is possible to achieve a large capacitance for the capacitor. The $BaTiO_3$ fine powder thus made is also very suitable as electrostrictive material, piezoelectric material and transparent ceramics.

Moreover, since inorganic material is used as the raw material, the manufacturing cost can be lowered significantly.

Also, the absence of the grinding process means that impurities are not mixed into the $BaTiO_3$ fine powder.

Using methods according to the invention, cubic system $BaTiO_3$ ($a_0=4.033\times10^{-10}$m) can be obtained.

The manufacture of strontium titanate $SrTiO_3$ fine powder will now be described. In the same way as with barium titanate fine powder, a hydrolysed product of Ti compound is prepared. Then, a water soluble Sr salt is prepared and is reacted with the above hydrolysed product of the Ti compound in a strong alkaline aqueous solution. When in the hydrolysed reaction, filtering to remove the sulphate group or the like is not required, the reaction in the strong alkaline aqueous solution can be carried out at the same time as the hydrolysation reaction.

The water soluble Sr salt can be $Sr(NO_3)_2$, $Sr(OH)_2$, $SrCl_2$, $Sr(CH_3COO)_2$ or $SrO$, while the alkali can be LiOH, KOH, NaOH, or $NH_4OH$.

The pH of the strong alkali aqueous solution is selected to be higher than 13.0. The molar ratio between Sr and Ti, Sr/Ti, is selected to be more than 0.3, more preferably 0.5 to 4. The reaction temperature is selected to be higher than 60°C. The reaction time is selected to be sufficient to effect the reaction.

After the reactions as described above, filtering, rinsing and drying treatments are carried out, if necessary.

With this method of manufacture, $SrTiO_3$ fine powder having a uniform particle size as small as 100 to $200\times10^{-10}$m can be obtained. Since in the previously proposed synthesis based on calcination, the $SrTiO_3$ was mechanically ground to a fine powder, the above particle size of 100 to $200\times10^{-10}$m could not be expected. When the $SrTiO_3$ fine powder made by a method according to the invention is used for forming a multilayer ceramic capacitor, the firing temperature can be lowered. Thus, lead can be mixed uniformly into the $SrTiO_3$ fine powder, removing the scatter characteristics. Then, since the dielectric constant of the material can be increased at room temperature, it is possible to achieve a large capacitance for the capacitor. The $SrTiO_3$ fine powder thus made is also very suitable as electrostrictive material, piezoelectric material and transparent ceramics.

Moreover, since inorganic material is used as the raw material, the manufacturing cost can be lowered significantly.

Moreover, the absence of the grinding process means that impurities are not mixed into the $SrTiO_3$ fine powder.

Using methods according to the invention, cubic system $SrTiO_3$ ($a_0=3.921\times10^{-10}$m) can be obtained.

Also, when $CaTiO_3$ fine powder is to be manufactured, a hydrolysed product of titanium Ti compound is prepared similarly. Then, a water soluble Ca salt is prepared and reacted with the above hydrolysed product of Ti compound in the suspension of strong alkaline aqueous solution. When in the hydrolysed reaction, filtering to remove the sulphate group or the like is not necessary, the reaction in the strong alkaline aqueous solution can be carried out at the same time as the above hydrolysation reaction.

The water soluble Ca salt can be $Ca(NO_3)_2$, $Ca(OH)_2$, $CaCl_2$, $Ca(CH_3COO)_2$ or CaO, while the alkali can be LiOH, KOH, NaOH or $NH_4OH$.

The pH of the suspension of strong alkaline aqueous solution is selected to be higher than 13.0, more preferably higher than 13.2. The molar ratio between Ca and Ti, Ca/Ti, is selected to be more than 0.3, more preferably 0.6 to 10. The reaction temperature is selected to be higher than 70°C, up to the boiling point of the aqueous solution, and preferably higher than 85°C. The reaction time is selected to be sufficient to effect the reaction.

After the reactions as described above, filtering, rinsing and drying treatments are carried out, if necessary.

With this method of manufacture, $CaTiO_3$ uniform fine powder having a particle size as small as 1 to 3 μm can be obtained. Since in the previously proposed synthesis based on calcination, the $CaTiO_3$ was mechanically ground to a fine powder, the above particle size of 1 to 3 μm could not be expected. When the $CaTiO_3$ fine powder made by a method according to the invention is used for forming a multilayer ceramic capacitor, the firing temperature can be lowered. Thus, lead can be mixed uniformly into the $CaTiO_3$ fine powder, removing the scatter characteristics. Then, since the dielectric constant of the material can be increased at room temperature, it is possible to achieve a large capacitance for the capacitor. The $CaTiO_3$ fine powder thus made is also very suitable as electrostrictive material, piezoelectric material and transparent ceramics.

Moreover, since inorganic material is used as the raw material, the manufacturing cost can be lowered significantly.

Moreover, the absence of the grinding process means that impurities are not mixed into the $CaTiO_3$ fine powder.

Using methods according to the invention,

rhombic system $CaTiO_3$ fine powder can be obtained.

The invention will now be described in more detail with reference to examples.

## Example 1

50 g of $TiCl_4$ was added to and stirred into 50 ml of water to make an aqueous solution to which aqueous solution including $Ba(NO_3)_2$ of molar amount equivalent to the Ti was added. KOH was further added thereto to make the pH 13.5. Then, while stirring the aqueous solution, the aqueous solution was continuously reacted at the reaction temperature of 100°C for four hours. The product made by this reaction was filtered, and the product rinsed with water and dried at 70°C for one day.

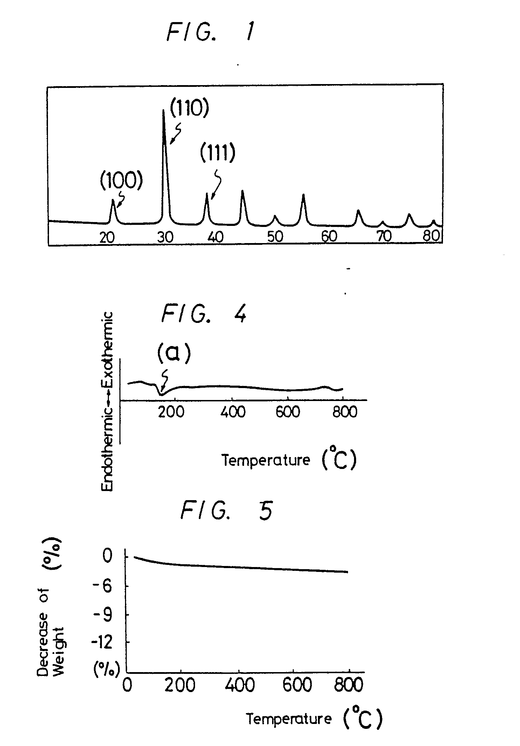

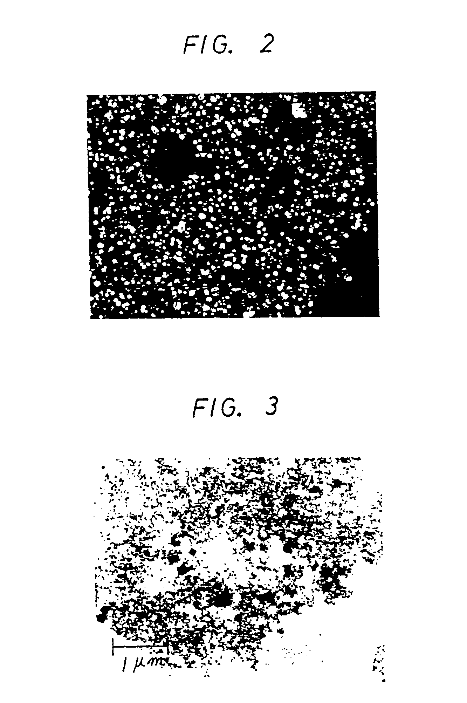

As a result of X-ray analysis of the product thus made, the diffraction pattern as shown in Figure 1 was obtained. Comparing this diffraction pattern with an American Society of Testing Materials (ASTM) card, it was confirmed that the $BaTiO_3$ thus made was of cubic system. In this case, the X-ray diffraction was performed by the powder method in which a copper target and nickel filter were used, and the time constant was selected to be "1". Moreover, as will be clear from a dark image and a bright image obtained by an electron microscope and as shown in Figures 2 and 3, the particle size of the $BaTiO_3$ fine powder in this example was in a range from 200 to $300 \times 10^{-10}$m and uniform.

## Example 2

50 g of $TiCl_4$ was added to and stirred into 100 g of water to make an aqueous solution to which $NH_4OH$ was added and hydrolysed to form a substantially neutral aqueous solution. Thereafter, $Ba(OH)_2$ in a molar amount of 0.95, approximately the same as the Ti, was added to the above neutral aqueous solution to which KOH was added to make the pH 14. The aqueous solution was then reacted at the reaction temperature of 90°C for three hours, then filtered, and the product rinsed with water and dried at 100°C for one day. The product was subjected to the same X-ray analysis as described above, resulting in a diffraction pattern similar to Figure 1. Also, the results with an electron microscope were the same as those of Figures 2 and 3.

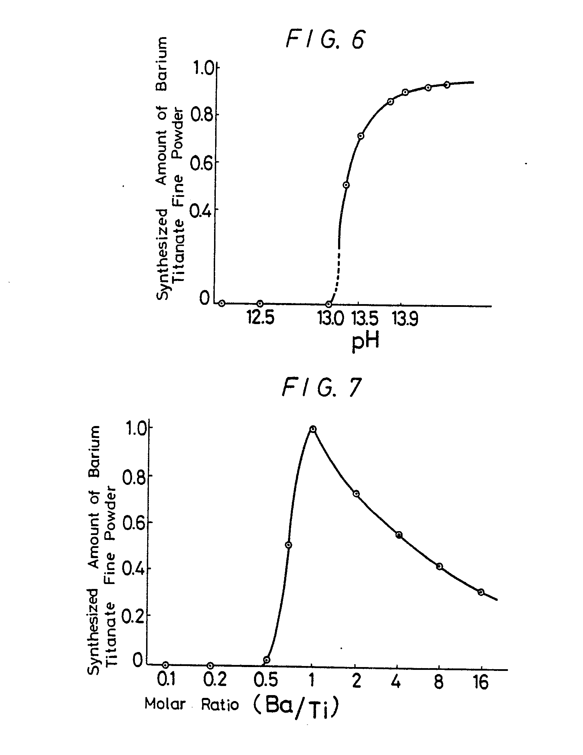

Furthermore, the $BaTiO_3$ fine powder of this example was subjected to differential thermal analysis and thermogravimetric analysis. The results thereof are indicated in Figures 4 and 5, respectively. As will be understood from these results, the $BaTiO_3$ fine powder contains no impurity. The dropped portion on the curve shown by a reference letter $a$ in Figure 4 is believed to be caused by the dehydration of the absorption water.

## Example 3

50 g of $TiCl_4$ was added to and stirred into 200 g of water to make an aqueous solution to which NaOH was added to make the aqueous solution substantially neutral. Thereafter, BaO was added to the neutral aqueous solution to which NaOH was further added to make the pH 13.7. This aqueous solution was reacted at 95°C for two hours, filtered, and the product rinsed with water and then dried at 100°C for one day. The product was subjected to the same X-ray analysis as described above, resulting in a diffraction pattern similar to Figure 1. Also the results with an electron microscope were the same as those of Figures 2 and 3.

## Example 4

50 g of $TiCl_4$ was added to and stirred into water to make an aqueous solution to which KOH was added to make the aqueous solution substantially neutral. Then, Ba in a molar amount twice that of the Ti was added to the above neutral aqueous solution to which KOH was further added to make the pH 13.3. In this state, this aqueous solution was reacted at 95°C for two hours. Thereafter, a top clear part of the solution was removed by decanting and water was added thereto again. This treatment was repeated and the product was rinsed with water. The product thus made then had an aqueous solution of $NH_4Cl$ added, was filtered, rinsed with water and then dried at 100°C for one day. This product was subjected to the same X-ray analysis as described above, resulting in a diffraction pattern similar to Figure 1. Also, the results with an electron microscope were the same as those of Figures 2 and 3.

## Example 5

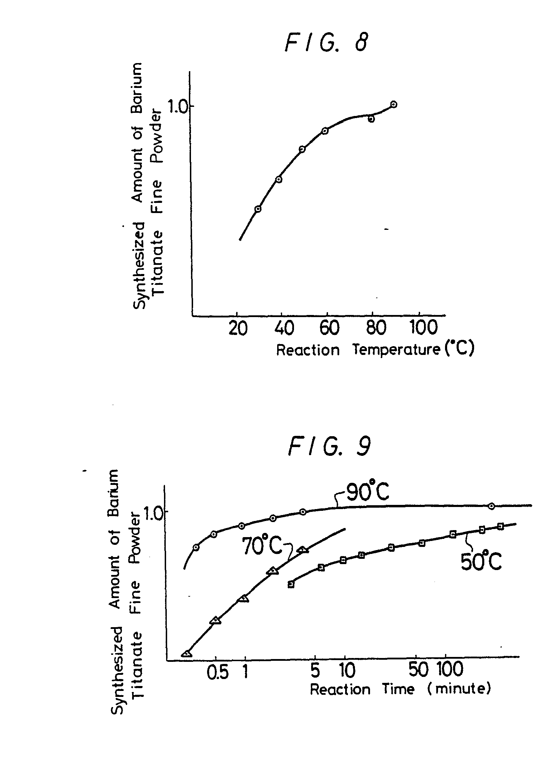

In this example, the pH dependency of the synthesised amount of $BaTiO_3$ was examined. Ba solution (suspension solution) of a molar amount equivalent to the Ti was added to the hydrolysed product of $TiCl_4$ to which KOH was then added. Then, the amount of $BaTiO_3$ synthesized when the solution thus made was reacted at 100°C for four hours was measured. The amount of $BaTiO_3$ synthesized was measured each time the amount of KOH added was varied to change the pH. The measured results are shown in the graph of Figure 6, which shows that the pH should be selected to be higher than 13.0, preferably higher than 13.5. In this case, the amount of $BaTiO_3$ produced was calculated from the area of the X-ray diffraction peak (110) of cubic-system perovskite. The X-ray analysis was carried out in substantially the same way as described above. That is, a copper target and a cobalt filter were employed, a voltage of 35 kV and a current of 25 mA were applied and the time constant was selected to be "1".

## Example 6

In this example, the relation between the synthesized amount of $BaTiO_3$ and the molar ratio was studied. $Ba(OH)_2$ of a predetermined amount was added to the hydrolysed product of $TiCl_4$ to which KOH was added to make the pH 14.0. The solution thus made was reacted at 100°C for four hours and thereafter, the amount of $BaTiO_3$ synthesized

was measured. While changing the amount of Ba(OH)$_2$, dependency of the amount of BaTiO$_3$ synthesized on the molar ratio Ba/Ti was studied. The results are shown in the graph of Figure 7, which shows that the molar ratio Ba/Ti should be higher than 0.5, preferably in a range from 0.7 to 5. In this case, the amount of BaTiO$_3$ synthesized was measured in the same way as in Example 5.

Example 7

In this example, the temperature dependency of the amount of BaTiO$_3$ synthesized was studied. Ba solution of the same molar amount as the Ti was added to the hydrolysed product of TiCl$_4$ to which KOH was then added to make the pH 13.9. The aqueous solution thus made was reacted for three hours. Then, the amount of BaTiO$_3$ synthesized was measured for reaction temperatures over a range from 15°C to the boiling point of the aqueous solution. The measured results are shown in the graph of Figure 8, which shows that the reaction temperature should be in a range from 40°C to the boiling point. In this case, the amount of BaTiO$_3$ synthesized was measured in the same way as in Example 5.

Example 8

In this example, the time dpendency of the amount of BaTiO$_3$ synthesized was studied. Ba solution of the same molar amount as the Ti was added to the hydrolysed product of TiCl$_4$ to which KOH was then added to make the pH 13.9. The aqueous solution thus made was reacted at 50°C, 70°C and 90°C, respectively. Then, the amount of BaTiO$_3$ synthesized was measured for every reaction time. The results are shown in the graph of Figure 9. A sufficient time for enabling the reaction to be achieved can be measured from the graph of Figure 9. Also, in this example, the amount of BaTiO$_3$ synthesized was measured in the same way as in Example 5.

Example 9

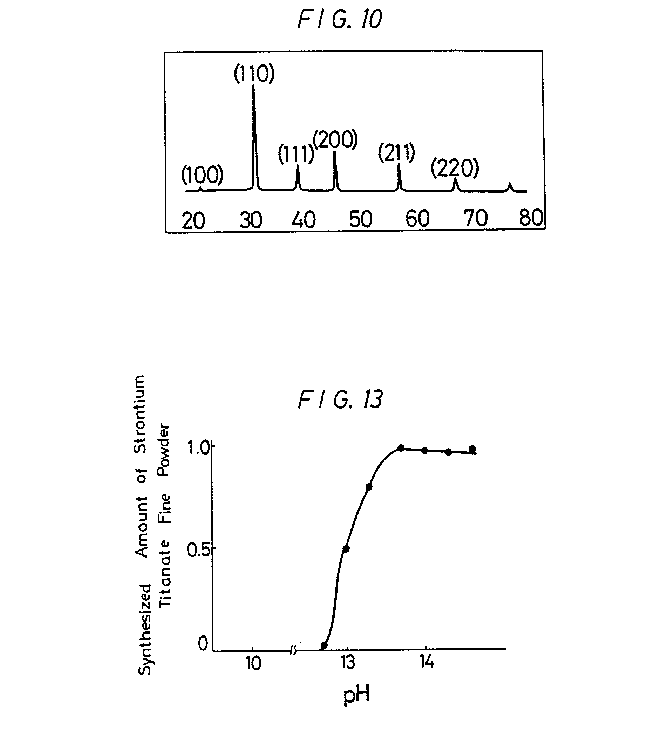

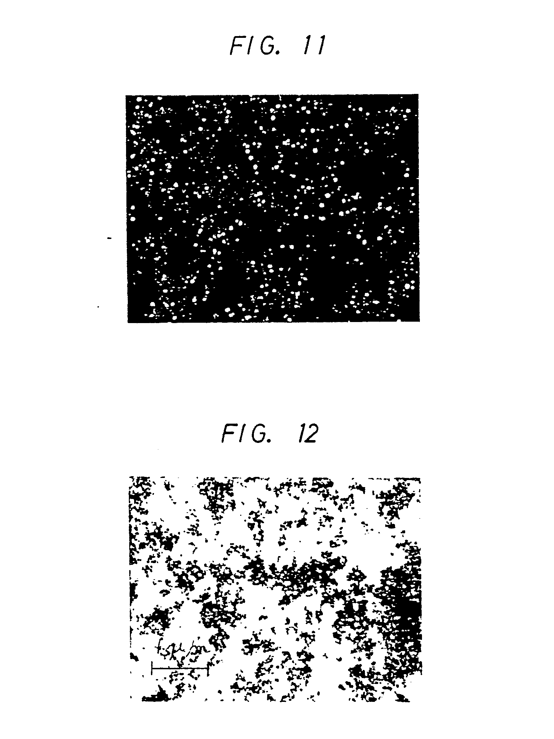

50 g of TiCl$_4$ was added to and stirred into 50 ml of iced water to make an aqueous solution to which a Sr(NO$_3$)$_2$ aqueous solution of molar amount equivalent to the Ti was added. KOH was further added to the solution to make the pH 13.7. Thereafter, the aqueous solution thus made was continuously reacted at 100°C for four hours. The product of this reaction was filtered, rinsed with water and then dried at 70°C for one day. This product was subjected to X-ray analysis, resulting in the diffraction pattern as shown in Figure 10. Comparing this diffraction pattern with an ASTM card, it was confirmed that the SrTiO$_3$ obtained was a cubic-system SrTiO$_3$ ($a_0 = 3921 \times 10^{-10}$m) fine powder. X-ray analysis was carried out by the powder method in which a copper target and a nickel filter were used. As will be clear from a dark image and a bright image shown in Figures 11 and 12, and obtained with an electron microscope, the particle size of the SrTiO$_3$ fine powder was in a range from 100 to $200 \times 10^{-10}$m and uniform.

Example 10

50 g of TiCl$_4$ was added to and stirred into 100 g of water to make an aqueous solution to which NH$_4$OH was added to be hydrolised, and form a neutral aqueous solution of pH 7. Thereafter, Sr(OH)$_2$ in a molar amount approximately the same as the Ti (Sr/Ti=1.05) was added to the neutral aqueous solution to make the pH 14. The aqueous solution thus made was reacted at 95°C for four hours. Then, the product was filtered rinsed with water and then dried at 100°C for one day. This product was subjected to similar X-ray analysis, resulting in the same diffraction pattern as in Figure 10. Moreover, the results obtained with an electron microscope were the same as those in Figures 11 and 12.

Example 11

50 g of TiCl$_4$ was added to and stirred into 200 g of water to make an aqueous solution of Ti to which NaOH was added to make a neutral solution of pH 7. SrCl$_2$ of the same molar amount as the Ti was added to the solution to which NaOH was further added to make the pH 14. The resulting solution was reacted at 100°C for three hours. The product thus made was filtered, rinsed with water and then dried at 100°C for one day. The product was subjected to the same X-ray analysis as mentioned above, resulting in a diffraction pattern the same as that shown in Figure 10. Moreover, results with an electron microscope were similar to those shown in Figures 11 and 12.

Example 12

NH$_4$OH was added to 200 ml of a 30 weight % of Ti(SO$_4$)$_2$ aqueous solution to make a neutral aqueous solution of pH 7, which was then filtered and the product rinsed with water. Thereafter, the product had added 1 l of water to which SrCl$_2$ in a molar amount equal to the Ti was added. KOH was also added thereto to make the pH 14, and the resulting solution was reacted at 100°C for four hours. The product thus made was filtered, rinsed with water and then dried. This product was subjected to the same X-ray analysis as mentioned above, resulting in a diffraction pattern the same as that shown in Figure 10. Moreover, the results with an electron microscope were similar to those shown in Figures 11 and 12.

Example 13

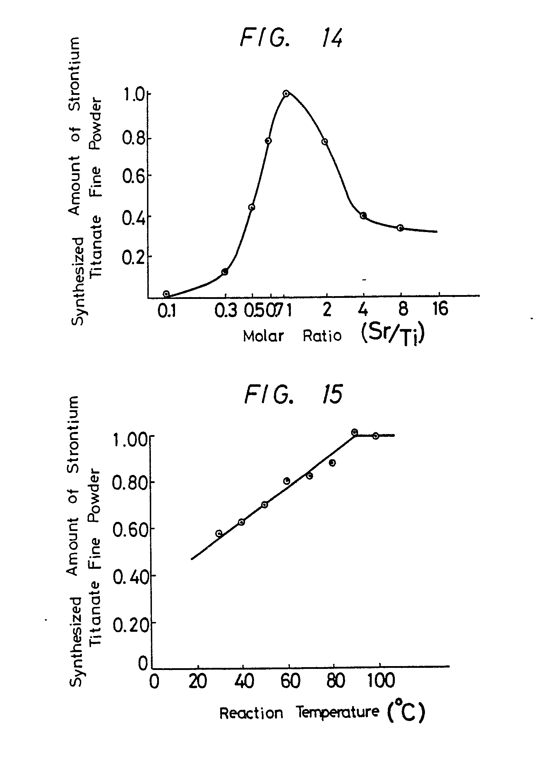

In this example, the pH dependency of the amount of the SrTiO$_3$ synthesized was measured. TiCl$_4$ was hydrolysed, and Sr salt in the same molar amount as the Ti and then KOH were added. Then, the amount of SrTiO$_3$ synthesized when the aqueous solution thus made was reacted at 100°C for three hours was measured. In this case, the amount of KOH added was varied so as to change the pH of the above aqueous solution. The results thereof are shown in the graph of Figure 13, which shows that the pH should be selected to be higher than 13.0. In this case, the amount of SrTiO$_3$ synthesized was

measured from the area of the X-ray diffraction peak (110).

Example 14

In this example, the dependency of the amount of the $SrTiO_3$ synthesized upon the molar ratio was studied. In this example, the $SrTiO_3$ was made in the same way as Example 13 where the pH was 14. Then, the molar ratio Sr/Ti was changed. The results thereof are shown in the graph of Figure 14, which shows that the molar ratio should be higher than 0.3, preferably in a range from 0.5 to 4. In this way, the amount of $SrTiO_3$ synthesized was measured in the same way as in Example 13.

Example 15

In this example, the temperature dependency of the amount of $SrTiO_3$ synthesized was studied. In this example also, the $SrTiO_3$ was made in the same way as in Example 13 where the molar ratio of Sr/Ti was 1.05 and the pH was 14. Then, the reaction temperature was changed. The results are shown in the graph of Figure 15, which shows that the reaction temperature is preferably higher than 60°C. In this case, the amount of $SrTiO_3$ synthesized was measured in the same way as in Example 13.

Example 16

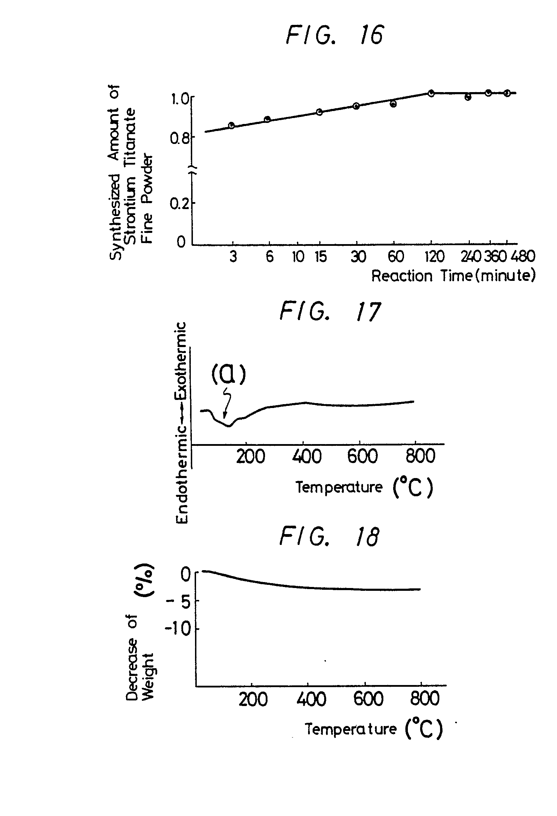

In this example, the dependency on time of the amount of $SrTiO_3$ synthesized was studied. Also in this example, the $SrTiO_3$ was made in the same way as in Example 13 where the pH was 14 and the molar ratio Sr/Ti was 1.05. Then, the reaction time was changed. The results are shown in the graph of Figure 16. From this graph, it is seen how the time affects the amount $SrTiO_3$ synthesized, the amount being measured in the same way as in Example 13.

Example 17

In this example, differential thermal analysis and thermogravimetric analysis were carried out. Also in this example, the $SrTiO_3$ was made in the same way as in Example 13 with the pH 14. In the analysis, the temperature was raised at a rate of 20°C/min. The results thereof are shown in the graphs of Figures 17 and 18, respectively. These graphs indicate that the $SrTiO_3$ fine powder contains no impurity. In this case, the dropped portion indicated by a reference letter *a* in Figure 17 is believed to be caused by the dehydration of the adsorption water.

Example 18

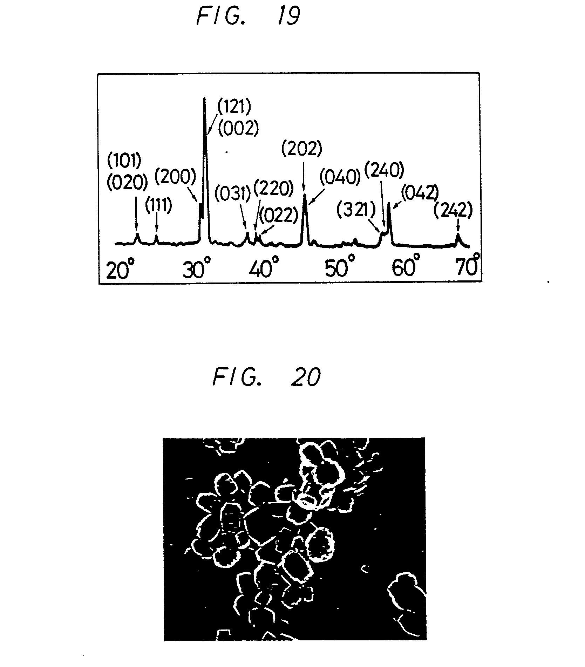

50 g of $TiCl_4$ was added to and stirred into 50 ml of iced water to make an aqueous solution to which $Ca(NO_3)_2$ aqueous solution of the same molar amount as the Ti was added. KOH was then added, thereby making the pH of this aqueous solution 13.7. Thereafter, while being stirred, this aqueous solution was continuously reacted at 100°C for four hours. The product made by this reaction was filtered, rinsed with water and then dried at 70°C for one day. This product was subjected to X-ray analysis, resulting in a diffraction pattern shown in Figure 19. The comparison of this diffraction pattern with the ASTM card confirmed the fact that the $CaTiO_3$ thus made was a rhombic-system $CaTiO_3$. The X-ray analysis was performed using the powder method with a copper target and a nickel filter. Moreover, as will be clear from a photograph obtained with a scanning electromicroscope and shown in Figure 20, the particle size of the $CaTiO_3$ fine powder in this example was in a range from 1 to 3 µm and uniform.

Example 19

50 g of $TiCl_4$ was added to and stirred into 100 g of water to make an aqueous solution to which $NH_4OH$ was added so as to make the solution substantially neutral. Then, $Ca(OH)_2$ in a molar amount substantially equal to the Ti was added to the above aqueous solution, to which KOH was further added to make the pH 14. This aqueous solution was reacted at 95°C for four hours. Thereafter, the product thus made was filtered, rinsed with water and then dried at 100°C for one day. The product was subjected to the same X-ray analysis as described above, resulting in a diffraction pattern similar to that of Figure 19. Also, the result obtained with a scanning electromicroscope was the same as that shown in Figure 20.

Example 20

50 g of $TiCl_4$ was added to and stirred into 200 g of water to make an aqueous solution to which NaOH was added to make the aqueous solution substantially neutral, that is, pH 7. Then, $CaCl_2$ in a molar amount equal to the Ti was added to the aqueous solution, to which NaOH was further added to make the pH 14. This aqueous solution was reacted at 100°C for three hours. Thereafter, the product thus made was filtered, rinsed with water and then dried at 100°C for one day. This product was subjected to the same X-ray analysis as described above, resulting in a diffraction pattern similar to that of Figure 19. Also, the result obtained with a scanning electromicroscope was the same as that shown in Figure 20.

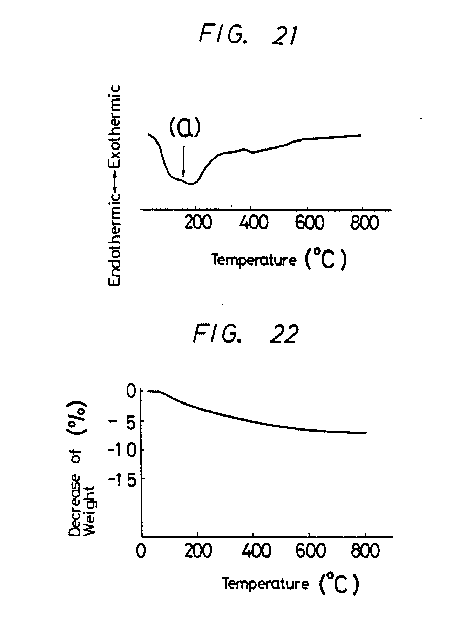

Moreover, the $CaTiO_3$ fine powder of this example was subjected to differential thermal analysis and thermogravimetric analysis in which the temperature was raised at a rate of 20°C per minute. The results thereof are shown in the graphs of Figures 21 and 22, respectively, which show that the $CaTiO_3$ fine powder contains no impurity. In this case, the dropped portion indicated by a reference letter *a* in Figure 21 is believed to be caused by the dehydration of the adsorption water.

Example 21

$NH_4OH$ was added to 200 ml of 30 weight % $Ti(SO_4)_2$ aqueous solution to make a substantially neutral aqueous solution of pH 7, which was then filtered and the product rinsed with water. Thereafter, this product was added to 1 l of water to

which $CaCl_2$ in a molar amount equal to the Ti was added. KOH was added thereto make the pH 14, and then the aqueous solution was continuously reacted at 100°C for four hours. Thereafter, the product thus made was filtered out, rinsed with water and then dried. This product was subjected to the same X-ray analysis as described above, resulting in a diffraction pattern similar to that of Figure 19. Also, the result obtained with a scanning electromicroscope was the same as that shown in Figure 20.

Example 22

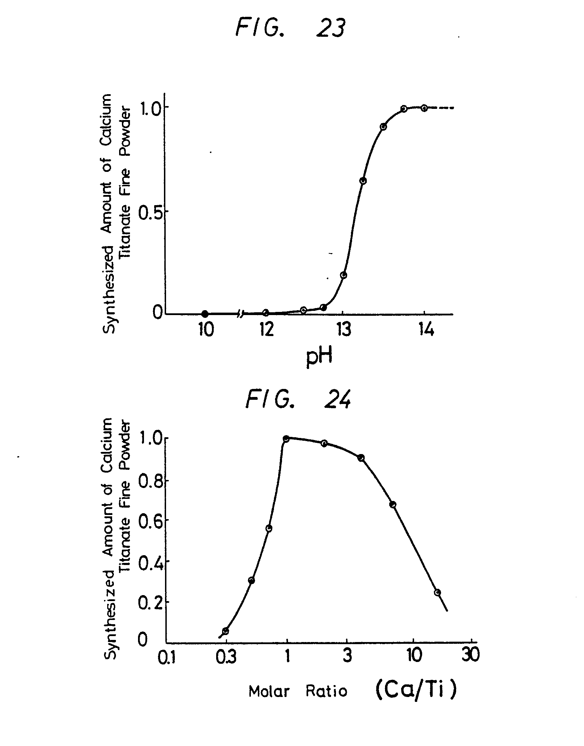

In this example, the pH dependency of the amount of $CaTiO_3$ synthesized was studied. A Ca salt in a molar amount equal to the Ti was added to a hydrolyzed product of $TiCl_4$ to which KOH was added thereafter. Then, the amount of $CaTiO_3$ synthesized when this aqueous solution was reacted at 100°C for three hours was measured. Then, the amount of $CaTiO_3$ synthesized was measured with the amount of KOH added varied to change the pH. The results are shown in the graph of Figure 23, which shows that the pH should be selected to be higher than 13.0, preferably higher than 13.2. In this case, the amount of $CaTiO_3$ synthesized was measured from the areas of the X-ray diffraction peaks (200) and $\binom{002}{121}$ of the rhombic-system $CaTiO_3$. The X-ray analysis was carried out in substantially the same way as described above.

Example 23

In this example, the dependency of the amount of $CaTiO_3$ synthesized on the molar ratio was measured. $Ca(OH)_2$ of a predetermined amount was added to the hydrolysed product of $TiCl_4$ to which KOH was then added to make the pH 14.0. Then, this aqueous solution was reacted at 100°C for three hours. Thereafter, the amount of $CaTiO_3$ synthesized was measured. And, while changing the amount of $Ca(OH)_2$, thus changing the molar ratio Cr/Ti, the amount of $CaTiO_3$ synthesized was measured. The results are shown in the graph of Figure 24 which shows that the molar ratio Ca/Ti should be selected to be higher than 0.3, preferably in a range from 0.6 to 10. In this case, the amount of $CaTiO_3$ synthesized was measured in the same way as in Example 22.

Example 24

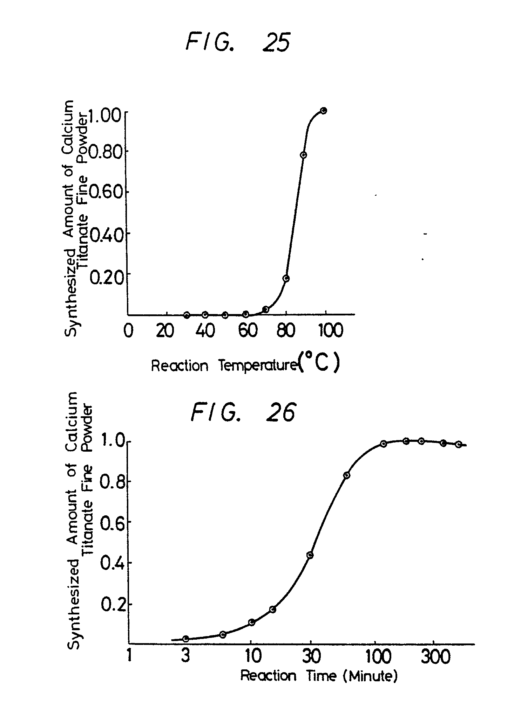

In this example, the temperature dependency of the amount of $CaTiO_3$ synthesized was studied. Ca solution in a molar amount of 1.05 approximately equal to the Ti was added to the hydrolysed product of $TiCl_4$, to which KOH was added then to make the pH 14, and the aqueous solution was then reacted for three hours. Then, the amount of $CaTiO_3$ synthesized was measured at each reaction temperature. The results are shown in the graph of Figure 25, which shows that the reaction temperature should be selected in a range from 70°C to the boiling point of the aqueous solution, more preferably higher than 85°C. In this case, the amount of $CaTiO_3$ synth-

esized was measured in the same way as in Example 22.

Example 25

In this example, the time dependency of the amount of $CaTiO_3$ synthesized was studied. Ca solution of a molar amount 1.05 approximately equal to the Ti was added to the hydrolysed product of $TiCl_4$, to which KOH was added to make the pH 14, and the resulting aqueous solution then was reacted at 100°C. The amount of $CaTiO_3$ synthesized was measured at each reaction time. The results are shown in the graph of Figure 26, from which the time dependency is seen. Also, in this example, the amount of $CaTiO_3$ synthesized was measured in the same way as in Example 22.

**Claims**

1. A method of manufacturing a metal titanate fine powder having the formula $MTiO_3$ wherein M is Ba, Sr or Ca, comprising the step of:
    preparing a hydrolysis product of an inorganic titanium compound $TiO_2 \cdot xH_2O$ by dissolving said inorganic titanium compound in a neutral or alkaline aqueous solution; and
    characterised by the further steps of:
    reacting said hydrolysis product with a water soluble salt of Ba, Sr or Ca in an aqueous alkaline solution having a pH value higher than 13 and at a temperature in a range from 40°C to the boiling point of the aqueous solution to obtain barium titanate fine powder, in a range from 60°C to the boiling point of the aqueous solution to obtain strontium titanate fine powder, or in a range from 70°C to the boiling point of the aqueous solution to obtain calcium titanate fine powder; and
    filtering said fine powder directly from the remaining solution without the need to calcine the filtered fine powder.

2. A method according to claim 1 wherein said titanium compound is selected from $TiCl_4$, $TiOSO_4$ and $Ti(SO_4)_2$.

3. A method according to claim 1 of manufacturing a barium titanate fine powder having the formula $BaTiO_3$ wherein said hydrolysis product is reacted with a water soluble salt of Ba.

4. A method according to claim 3 wherein said aqueous alkaline solution has a pH value not less than 13.5.

5. A method according to claim 3 wherein a molar ratio, Ba/Ti is not less than 0.5.

6. A method according to claim 3 wherein said molar ratio Ba/Ti is in a range from 0.7 to 5.

7. A method according to claim 3 wherein a water soluble barium salt is selected from $Ba(NO_3)_2$, $Ba(OH)_2$, $BaCl_2$ and $Ba(CH_3COO)_2$.

8. A method according to claim 1 of manufacturing a strontium titanate fine powder having the formula $SrTiO_3$ wherein said hydrolysis product is reacted with a water soluble salt of Sr.

9. A method according to claim 8 wherein a molar ratio Sr/Ti is not less than 0.3.

10. A method according to claim 8 wherein a molar ratio Sr/Ti is selected to be in a range from 0.5 to 4.

11. A method according to claim 8 wherein a water soluble strontium salt is selected from $Sr(NO_3)_2$, $Sr(OH)_2$, $SrCl_2$, $Sr(CH_3COO)_2$, or SrO.

12. A method according to claim 1 of manufacturing a calcium titanate fine powder having the formula $CaTiO_3$ wherein said hydrolysis product is reacted with a water soluble salt of Ca.

13. A method according to claim 12 wherein said aqueous alkaline solution has a pH value not less than 13.2.

14. A method according to claim 12 wherein a molar ratio Ca/Ti is not less than 0.3.

15. A method according to claim 12 wherein a molar ratio Ca/Ti is in a range from 0.6 to 10.

16. A method according to claim 12 wherein the reacting temperature is in a range from 85°C to the boiling point of the aqueous solution.

17. A method according to claim 12 wherein a water soluble calcium salt is selected from $Ca(NO_3)_2$, $Ca(OH)_2$, $CaCl_2$, $Ca(CH_3COO)_2$ and CaO.

## Patentansprüche

1. Verfahren zur Herstellung eines feinen Metall-Titanat-Pulvers mit der Formel: $MTiO_3$, wobei M:Ba, Sr oder Ca ist, das den Schritt
Darstellung eines Hydrolyseproduktes einer anorganischen Titanverbindung: $TiO_2 \times H_2O$ durch Lösen dieser anorganischen Titanverbindung in einer neutralen oder alkalischen wäßrigen Lösung, enthält;
und gekennzeichnet durch die weiteren Schritte:
Reaktion dieses Hydrolyseprodukts mit einem wasserlöslichen Ba-, Sr- oder Ca-Salz in einer wäßrigen alkalischen Lösung, die einen pH-Wert größer als 13 aufweist und
in einem Temperaturbereich von 40°C bis zum Siedepunkt dieser wäßrigen Lösung, um feines Bariumtitanat-Pulver zu gewinnen,
in einem Bereich von 60°C bis zum Siedepunkt dieser wäßrigen Lösung, um feines Strontiumtitanat-Pulver zu gewinnen, oder
in einem Bereich von 70°C bis zum Siedepunkt dieser wäßrigen Lösung, um feines Calsiumtitanat-Pulver zu gewinnen, und
Filtrierung dieses feinen Pulvers direkt aus der verbleibenden Lösung ohne das filtrierte feine Pulver kalzinieren zu müssen.

2. Verfahren gemäß Anspruch 1, bei dem die Titanverbindung ausgewählt ist aus: $TiCl_4$, $TiOSO_4$ und $Ti(SO_4)_2$.

3. Verfahren gemäß Anspruch 1 zur Herstellung eines feinen Bariumtitanat-Pulvers mit der Formel: $BaTiO_3$, bei dem dieses Hydrolyseprodukt mit einem wasserlöslichen Ba-Salz reagiert.

4. Verfahren gemäß Anspruch 3, bei dem diese wäßrige alkalische Lösung keinen geringeren pH-Wert als 13,5 aufweist.

5. Verfahren gemäß Anspruch 3, bei dem das molare Verhältnis von Ba/Ti nicht weniger als 0,5 ist.

6. Verfahren gemäß Anspruch 3, bei dem das molare Verhältnis von Ba/Ti in einem Bereich von 0,7 bis 5 ist.

7. Verfahren gemäß Anspruch 3, bei dem das wasserlösliche Ba-Salz ausgewählt ist aus: $Ba(NO_3)_2$, $Ba(OH)_2$, $BaCl_2$ und $Ba(CH_3COO)_2$.

8. Verfahren gemäß Anspruch 1 zur Herstellung eines feinen Strontiumtitanat-Pulvers mit der Formel: $SrTiO_3$, bei dem dieses Hydrolyseprodukt mit einem wasserlöslichen Sr-Salz reagiert.

9. Verfahren gemäß Anspruch 8, bei dem das molare Verhältnis von St/Ti nicht weniger als 0,3 ist.

10. Verfahren gemäß Anspruch 8, bei dem das molare Verhältnis von Sr/Ti aus einem Bereich von 0,5 bis 4 ausgewählt ist.

11. Verfahren gemäß Anspruch 8, bei dem wasserlösliche Sr-Salz ausgewählt ist aus: $Sr(NO_3)_2$, $Sr(OH)_2$, $SrCl_2$ $Sr(CH_3COO_2)$ oder SrO.

12. Verfahren gemäß Anspruch 1 zur Herstellung eines feinen Calciumtitanat-Pulvers mit der Formel: $CaTiO_3$, bei dem das Hydrolyseprodukt mit einem wasserlöslichen Ca-Salz reagiert.

13. Verfahren gemäß Anspruch 12, bei dem diese wäßrige alkalische Lösung keinen geringeren pH-Wert als 13,2 aufweist.

14. Verfahren gemäß Anspruch 12, bei dem das molare Verhältnis von Ca/Ti nicht weniger als 0,3 ist.

15. Verfahren gemäß Anspruch 12, bei dem das molare Verhältnis von Ca/Ti in einem Bereich von 0,6 bis 10 ist.

16. Verfahren gemäß Anspruch 12, bei dem die Reaktionstempertur in einem Bereich von 85°C bis zum Siedepunkt der wäßrigen Lösung ist.

17. Verfahren gemäß Anspruch 12, bei dem das wasserlösliche Ca-Salz ausgewählt ist aus: $Ca(NO_3)_2$, $Ca(OH)_2$, $CaCl_2$, $Ca(CH_3COO)_2$ und CaO.

## Revendications

1. Un procédé de préparation d'une poudre fine de titanate métallique répondant à la formule $MTiO_3$ dans laquelle M est Ba, Sr ou Ca, comprenant la stade consistant à:
préparer un produit d'hydrolyse d'un composé minéral du titane $TiO_2 \cdot \times H_2O$ par dissolution dudit composé minéral du titane dans une solution aqueuse neutre ou alcaline;
et caractérisé par les stades complémentaires qui consistent à:
faire réagir ledit produit d'hydrolyse avec un sel soluble dans l'eau de Ba, Sr ou Ca dans une solution aqueuse alcaline ayant un pH supérieur à 13 et à une température dans une gamme comprise entre 40°C et le point d'ébullition de la solution aqueuse pour obtenir une poudre fine de titanate de baryum, dans une gamme comprise entre 60°C et le point d'ébullition de la solution aqueuse pour obtenir une poudre fine de titanate de strontium ou dans une gamme comprise entre 70°C et le point d'ébullition de la solution aqueuse pour obtenir une poudre fine de titanate de calcium; et
filtrer ladite poudre fine directement de la solution restante sans qu'il soit nécessaire de calciner la poudre fine filtrée.

2. Un procédé selon la revendication 1, dans lequel ledit composé du titane est choisi parmi TiCl$_4$, TiOSO$_4$ et Ti(SO$_4$)$_2$.

3. Un procédé selon la revendication 1 pour la préparation d'une poudre fine de titanate de baryum répondant à la formule BaTiO$_3$ dans lequel ledit produit d'hydrolyse est mis à réagir avec un sel de Ba soluble dans l'eau.

4. Un procédé selon la revendication 3, dans lequel ladite solution aqueuse alcaline a un pH qui n'est pas inférieur à 13,5.

5. Un procédé selon la revendication 3, dans lequel le rapport molaire Ba/Ti n'est pas inférieur à 0,5.

6. Un procédé selon la revendication 3, dans lequel ledit rapport molaire Ba/Ti est dans une gamme de 0,7 à 5.

7. Un procédé selon la revendication 3, dans lequel on choisit un sel de baryum soluble dans l'eau parmi Ba(NO$_3$)$_2$, Ba(OH)$_2$, BaCl$_2$ et Ba(CH$_3$COO)$_2$.

8. Un procédé selon la revendication 1 pour la préparation d'une poudre fine de titanate de strontium répondant à la formule SrTiO$_3$ dans lequel on fait réagir ledit produit d'hydrolyse avec un sel soluble dans l'eau de Sr.

9. Un procédé selon la revendication 8, dans lequel le rapport molaire Sr/Ti n'est pas inférieur à 0,3.

10. Un procédé selon la revendication 8, dans lequel le rapport molaire Sr/Ti est choisi pour être dans la gamme de 0,5 à 4.

11. Un procédé selon la revendication 8, dans lequel on choisit un sel de strontium soluble dans l'eau parmi Sr(NO$_3$)$_2$, Sr(OH)$_2$, SrCl$_2$, Sr(CH$_3$COO)$_2$ ou SrO.

12. Un procédé selon la revendication 1 pour la préparation d'une poudre fine de titanate de calcium répondant à la formule CaTiO$_3$ dans lequel ledit produit d'hydrolyse est mis à réagir avec un sel de Ca soluble dans l'eau.

13. Un procédé selon la revendication 12, dans lequel ladite solution aqueuse alcaline a un pH qui n'est pas inférieur à 13,2.

14. Un procédé selon la revendication 12, dans lequel le rapport molaire Ca/Ti n'est pas inférieur à 0,3.

15. Un procédé selon la revendication 12, dans lequel le rapport molaire Ca/Ti est dans la gamme de 0,6 à 10.

16. Un procédé selon la revendication 12, dans lequel la température de réaction est dans une gamme comprise entre 85°C et le point d'ébullition de la solution aqueuse.

17. Un procédé selon la revendication 12, dans lequel on choisit un sel de calcium soluble dans l'eau parmi Ca(NO$_3$)$_2$, Ca(OH)$_2$, CaCl$_2$, Ca(CH$_3$COO)$_2$ et CaO.

FIG. 1

FIG. 4

FIG. 5

FIG. 2

FIG. 3

1 μm

*F I G. 6*

*F I G. 7*

# F I G. 8

# F I G. 9

4

*F I G. 10*

*F I G. 13*

## FIG. 11

## FIG. 12

FIG. 14

FIG. 15

FIG. 16

FIG. 17

FIG. 18

FIG. 19

FIG. 20

## FIG. 21

## FIG. 22

FIG. 23

FIG. 24

FIG. 25

FIG. 26